# EUROPÄISCHE PATENTANMELDUNG

(11) **EP 0 578 857 A1**
(43) Veröffentlichungstag der Anmeldung: **19.01.1994**
(21) Anmeldenummer: 92112198.4
(22) Anmeldetag: 17.07.1992
(51) Int. Cl.: B29B 13/02, B29K 27/18

(54) **Verfahren zum Schmelzen von klebrigen, thermo- oder duroplastischen Massen**

(71) Anmelder: STEINMEYER KLEBETECHNIK GmbH, D-65517 Bad Camberg (DE)
(72) Erfinder: Mielke, Norbert, W-6384 Schmitten 1 (DE)
(74) Vertreter: Schubert, Siegmar, Dipl.-Ing.

(57) **Zusammenfassung**

Bei einem Verfahren zum Schmelzen von klebrigen, thermo- oder duroplastischen Massen, insbesondere Schmelzhaftklebstoffen, wird die Masse in Form eines Masseblocks (21) in einen Druckraum (15) einer Druckschmelzvorrichtung (10) eingegeben und mittels einer Druckplatte (13) gegen eine beheizbare Bodenplatte (12) gepreßt und aufgeschmolzen. Damit Masseblöcke (21) ohne Umhüllung (Folie) aufgeschmolzen werden können, ohne an dem Druckraum zu haften, wird ein solcher in die Druckschmelzvorrichtung (10) eingegeben, worin er in dem Druckraum (15) durch eine antiadhäsive, druckfeste Grenzschicht (17) begrenzt wird. Im Bereich der Druckplatte (13) liegt er an einer gekühlten Grenzfläche an.

## Beschreibung

Die Erfindung betrifft ein Verfahren zum Schmelzen von klebrigen, thermo- oder duroplastischen Massen nach dem Oberbegriff des Anspruchs 1.

Ein weiterer Aspekt der Erfindung betrifft eine Druckschmelzvorrichtung zur Ausübung dieses Verfahrens gemäß dem Oberbegriff des Anspruchs 5.

Mit dem erfindungsgemäßen Verfahren bzw. der entsprechenden Druckschmelzvorrichtung sollen insbesondere Schmelzhaftklebstoffe oder vergleichbare hochviskose, haftfähige Massen in Blockform unter Druck aufgeschmolzen werden. Die Schmelzhaftklebstoffe werden generell bei der Herstellung in Blöcke gegossen und einzeln in silikonisierten Kartonboxen verpackt transportiert und gelagert. Die Größe und Form der Masseblökke des zu schmelzenden Materials können in einem großen Bereich variieren. Zur Zeit handelsübliche Masseblöcke sind rechteckig und haben ein Gewicht bis 20 kg.

Nach einem bekannten Prinzip der Weiterverarbeitung können die Masseblöcke einfach in offenen Schmelzgefäßen oder Rührwerken aufgeschmolzen werden. Dabei werden jedoch die Klebeigenschaften insbesondere durch Oxidation und Alterung der Klebstoffadditive unter Wärmeeinfluß beeinträchtigt, da der Schmelzhaftklebstoff nach diesem Verfahren zum Aufschmelzen über mehrere Stunden verhältnismäßig hoch erhitzt wird.

Diese Nachteile treten nicht auf bei dem gattungsgemäßen Verfahren und der zu dessen Ausführung verwendeten Druckschmelzvorrichtung. Eine solche Vorrichtung, wie sie beispielsweise aus der DE-OS 19 35 398 bekannt ist, umfaßt einen oben offenen, jedoch durch einen Teil einer Druckvorrichtung verschließbaren Behälter bzw. eine Aufnahme, die einen Masseblock aus normalerweise festem, thermoplastischem Material aufnehmen kann. Der untere Teil des Behälters bzw. der Aufnahme ist mit einer Heizvorrichtung versehen, die so gesteuert wird, daß nur der untere, auf dem Boden des Behälters aufliegende Teil des Masseblocks schmilzt, während der darüber befindliche, äußere Teil des Masseblocks in festem Zustand verbleiben soll. Der Boden steht mit einem Kanal in Verbindung, aus dem die aufgeschmolzenen Masse abfließen kann. Die Druckvorrichtung dient zum Aufbringen eines nach unten gerichteten Drucks auf den Masseblock, um diesen gegen den Boden zu drücken. Dieses Verfahren und die hierzu verwendete Vorrichtung arbeiten jedoch bei Schmelzhaftklebstoffen oder vergleichbaren Schmelzmassen mit großer Haftfähigkeit nicht immer befriedigend, da trotz des Prinzips, den Masseblock möglichst nur an seiner unteren Stelle aufzuschmelzen, die hohe Oberflächenklebrigkeit solcher Schmelzmassen ausreicht, um diese in unerwünschter Weise fest an den Innenwänden der Schmelzvorrichtung anhaften zu lassen.

Letzteres, Störungen des Aufschmelzvorgangs verursachendes Haften wird nach einem anderen bekannten Verfahren vermieden, bei dem ebenfalls der Masseblock in die Druckschmelzvorrichtung eingegeben wird und der Block mit einem Kolben gegen eine beheizbare Bodenplatte gepreßt und aufgeschmolzen wird, wobei sich das Verfahren dadurch auszeichnet, daß der Block vor dem Eingeben in die Schmelzvorrichtung in ein leicht verformbares Material eingehüllt wird und samt der Umhüllung dem Preßdruck ausgesetzt wird. Die Umhüllung besteht insbesondere aus schmelzbarem Material, vorzugsweise aus einem Rohstoff, welches auch bei der Herstellung des Schmelzhaftklebers verwendet wird und sich beim Aufschmelzen mit dem Schmelzhaftkleber vermischen kann. Es sind dies insbesondere Polymere, Polyäthylen oder Copolyamid. Damit ist es möglich, auch thermo- oder duroplastische Massen hoher Oberflächenklebrigkeit bei geringer thermischer Belastung in der Druckschmelzvorrichtung zu schmelzen. Die Umhüllung um das aufzuschmelzende Material verhindert nicht nur ein Anhaften des klebrigen Materials an den Wänden eines Zuführschachtes zu einem Druckraum, in dem der Masseblock nach unten gegen einem beheizten Boden gedrückt wird, sondern auch an den Innenflächen des Druckraums, womit ein Blockieren eines den Masseblock nach unten drückenden Kolbens verhindert wird. Die Umhüllung wird bei der Druckausübung zerstört, und bei dem Schmelzvorgang wird die Umhüllung mit in den Schmelzhaftklebstoff eingeschmolzen. Dieses Verfahren setzt also die Verwendung besonders vorbereiteter Masseblöcke voraus.

Der vorliegenden Erfindung liegt die Aufgabe zugrunde, ein Verfahren zum Schmelzen von klebrigen thermo- oder duroplastischen Massen sowie eine hierfür geeignete Druckschmelzvorrichtung der jeweils eingangs genannten Gatttung so weiterzubilden, daß auch übliche Masseblöcke, die nicht mit leicht verformbaren Material, insbesondere Folien, eingehüllt sind, aufgeschmolzen werden können, ohne ein Anhaften des Materials an den Innenflächen des Druckraums der Druckschmelzvorrichtung hervorzurufen.

Diese Aufgabe wird durch die in dem kennzeichnenden Teil des Anspruchs 1 angegebene Verfahrensweise gelöst. Eine entsprechende, zur Ausübung dieses Verfahrens geeignete Druckschmelzvorrichtung ist in dem kennzeichnenden Teil des Anspruchs 5 angegeben. Erfindungsgemäß wird das unerwünschte Anhaften der haftfähigen Masse an der Innenwand der Aufnahme also nicht durch eine Umhüllung des Masseblocks verhindert, die den Herstellungsaufwand des Masseblocks vergrößert und jeweils beim Aufschmelzen des Masseblocks mit verschmolzen wird, sondern durch eine antiadhäsive, druckfeste Grenzschicht in dem Druckraum, an welcher der Masseblock ohne Umhüllung anliegt, sowie in Kombination damit an einer Grenzfläche einer gekühlten Druckplatte anliegt. Hierzu sind zumindest die den Druckraum bildenden Teile der Druckschmelzvorrichtung mit antiadhäsivem, druckfestem Material vorzugsweise rundum beschichtet bzw. versiegelt.

Das erfindungsgemäße Verfahren ist damit universell, insbesondere auch zum Aufschmelzen nicht eingehüllter Masseblöcke aus einem Material geeignet, welches eine Schmelzmasse hoher Oberflächenklebrigkeit bildet.

Das Verfahren zum Schmelzen der klebrigen thermo- oder duroplastischen Massen insbesondere Schmelzhaftklebstoffe gestaltet sich einfach, da der Masseblock ohne weiteres in die Druckschmelzvorrichtung eingegeben werden kann, wo er in dem Druckraum durch die antiadhäsive, druckfeste Grenzschicht und zusätzlich durch die gekühlte Grenzfläche an der Druckplatte begrenzt wird, welche das unerwünschte Haften vermindern bzw. ganz verhindern. Durch die Grenzfläche an der gekühlten Druckplatte wird die Trennung der klebirgen Masse von der Druckplatte wesentlich erleichtert. Der gesamte Arbeitsablauf kann damit rasch und störungsfrei erfolgen. Die Vorteile des unter Druck ablaufenden Aufschmelzverfahrens, insbesondere die geringe thermische Belastung der aufzuschmelzenden Masse, bleiben erhalten.

Inbesondere wird nach den Ansprüchen 2 und 3 das Verfahren noch dadurch weiter verbessert, daß zwischen die Druckplatte und den Masseblock Luft gepreßt wird, wenn die Druckplatte ihre tiefste Stellung erreicht hat und zurückgefahren werden soll, um den Kontakt zwischen der Druckplatte und dem restlichen Masseblock zu trennen.

Gemäß Anspruch 4 erfolgt die Kühlung der Druckplatte während des gesamten Arbeitsablaufs, wogegen die Heizung der Bodenplatte Energie sparend nur während der Schmelzphasse des Masseblocks eingeschaltet ist.

Die zur Ausübung des Verfahrens geeignete Druckschmelzvorrichtung mit den mit antiadhäsivem, druckfestem Material beschichteten bzw. versiegelten Teilen, die insbesondere den Druckraum begrenzen, und mit einer gekühlten Druckplatte weist nach Anspruch 5 einen verhältnismäßig einfachen Aufbau auf. Anlagen mit solchen Druckschmelzvorrichtungen sind kostengünstiger als bei der Verwendung von Extrudern oder Faßschmelzanlagen vergleichbarer Leistung. Die typischen Vorteile von Druckschmelzvorrichtungen bleiben erhalten, wie eine einfache Steuerung des Materialdurchsatzes in Abhängigkeit von dem Bedarf durch Einstellen der Kraft, mit welcher die Druckplatte in dem Druckraum abgesenkt wird. Probleme bei einer Temperaturregelung treten nicht auf. Die Gestaltung der Bodenplatte der Druckschmelzvorrichtung ist trotz einer abschließenden Beschichtung mit antiadhäsivem, druckfestem Material frei. Der Boden kann daher mit Auslaufkanälen so gestaltet sein, daß sehr hochviskose Materialien aufschmelzbar und ableitbar sind. Die weitere Handhabung des aufgeschmolzenen Materials ist durch die erfindungsgemäße Beschichtung bzw. Auskleidung praktisch unbeeinflußt. So kann ein kontinuierlicher Fluß des geschmolzenen Materials auch im Bedarfsfall gepuffert werden, wenn dies beispielsweise beim Auftragen von Haftklebstoff im Sprühverfahren erforderlich ist. Trotz der Beschichtung des beheizbaren Bodens bleibt ein guter Wärmeübergang zwischen ihm und dem Masseblock erhalten, weil die Beschichtung zweckmäßig nur 70 um dick ist. Zu dem guten Wärmeübergang trägt die absenkbare Druckplatte wesentlich bei. Sie beschleunigt den Schmelzvorgang und ruft einen unmittelbaren Abtransport des geschmolzenen Materials durch Auslaufkanäle des Bodenplatte hervor. Der Materialdurchsatz kann hoch sein. Gleichwohl ist die thermische Belastung des Materials gering. Die Vorteile des Schmelzens praktisch unter Luftabschluß bleiben ebenfalls erhalten, da die Druckplatte im wesentlichen dicht, aber gleitfähig in die Aufnahme paßt.

Durch die Rundum-Versiegelung der Teile der Druckschmelzvorrichtung - mit Ausnahme eines die Druckplatte betätigenden Zylinders - wird die Reinigung erleichtert.

Eine zusätzliche Innenauskleidung der Innenwände des Druckraums ist vorteilhaft, weil hier die Beschichtung einem Verschleiß unterliegen würde und die statt dessen dem Verschleiß ausgesetzte Auskleidung schnell und kostengünstig ersetzt werden kann.

Durch eine thermische Trennung des beheizten Bodens von der Aufnahme mittels der Zwischenlage nach Anspruch 12, wozu vorteilhaft dasselbe Material wie zu der antiadhäsiven, druckfesten Beschichtung bzw. Auskleidung des Druckraums verwendet wird, bleibt die Aufnahme, die einen Teil des Druckraums bildet, trotz der beheizten Bodenplatte auf verhältnismäßig niedriger Temperatur. Dadurch wird weiter gesichert, daß der Masseblock nicht an der Aufnahme während des Absenkens zum Aufschmelzen haftet.

Die Erfindung wird im folgenden anhand einer Figur beschrieben, in der eine Druckschmelzvorrichtung, in der sich bereits aufgeschmolzene Schmelzhaftstoff-Klebsstoffmasse befindet, in einer auseinandergenommenen Darstellung schematisch in einem senkrechten Schnitt dargestellt ist.

Die allgemein mit 10 bezeichnete Druckschmelzvorrichtung besteht im wesentlichen aus einer oben und unten offenen Aufnahme 11, die praktisch einen Teil eines druckfesten Behälters darstellt, der unten durch eine elektrisch beheizbare Bodenplatte 12 abgeschlossen ist und oben durch eine aus der gezeichneten Stellung absenkbare Druckplatte 13 verschließbar ist. Zum Antrieb der Druckplatte dient ein (Antriebs-)Zylinder 14.Der von der Aufnahme 11, der Bodenplatte 12 und der abgesenkten Druckplatte 13 eingeschlossene Raum wird als Druckraum 15 bezeichnet.

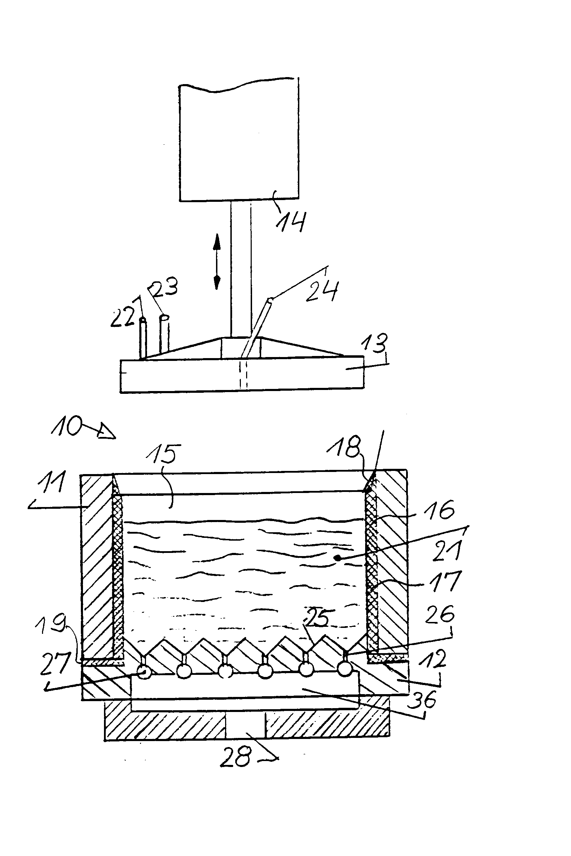

Alle diese voranstehend besprochenen Teile der Druckschmelzvorrichtung sind rundum mit einer PTFE-Beschichtung im Einbrennverfahren versiegelt, wobei diese Beschichtung in der Zeichnung nicht dargestellt ist.

Innenwände 16 des Druckraums 15 sind zusätzlich mit 10 mm dicken Platten 17 aus PTFE ausgekleidet.

Die Platten 17 sind in ihrem oberen Rand mit einer Abschrägung 18 versehen, welche eine sichere, beschädigungsfreie Einführung der Druckplatte 13 gestattet. Die die Innenauskleidung des Druckraums 15 bildenden PTFE-Platten gehen an ihrem unteren Rand in eine PTFE-Zwischenlage über, welche die Bodenplatte 12 thermisch weitgehend von der Aufnahme 11 trennt.

Die Druckplatte 13 ist zusätzlich so ausgestaltet, daß von ihrer unteren Fläche 20 die Schmelzhaftklebstoffmasse 21 leicht getrennt werden kann. Sie weist hierzu eine Kühleinrichtung auf, von der ein Eintritts- und ein Austrittsanschluß 22 bzw. 23 in der Zeichnung zu erkennen sind. Weiterhin ist die Druckplatte 13 mit einem Anschluß 24 für Abdrückluft versehen, die bis zu einer Öffnung an der unteren Fläche 20 der Druckplatte 13 reicht.

Die Bodenplatte 12 ist weitgehend konventionell aufgebaut: Sie weist auf ihrer Innenfläche ein sägezahnförmiges Profil auf, welches sich aus quer und längs verlaufenden, unmittelbar aneinandergrenzenden Nuten 25 ergibt. Die Nuten stehen über Bohrungen 26 und Auslaßkanäle 27 mit einem zentralen Auslauf 28 in einer den aufgeschmolzenen Schmelzhaftkleber leitenden Verbindung.

Nicht dargestellt in der Zeichnung ist eine Steuereinrichtung, mit welcher eine Hubbewegung der Druckplatte 13, die Kühlung dieser Druckplatte sowie die Temperatur der heizbaren Bodenplatte 12 gesteuert werden. Mittels dieser Steuereinrichtung wird folgender Arbeitsablauf durchgeführt:

Zunächst wird in den ursprünglich leeren Druckraum 15 bei weit angehobener Druckplatte 13 ein Masseblock Schmelzhaftklebstoff eingelegt, der keinerlei Umhüllung, insbesondere keine Folie aus Polymer, Polyäthylen oder Copolyamid aufzuweisen braucht. Es können jedoch auch Klebstoffblocks mit einer solchen Umhüllung verwendet werden, die aber verhältnismäßig aufwendig sind.

In jedem Fall wird zunächst nach Einlegen des Masseblocks in den Druckraum 15 die Druckplatte 13 durch den Zylinder 14 nach unten zur Anlage auf die Bodenplatte 12 gedrückt, wobei gleichzeitig der Druckraum 15 durch den Abschluß mittels der Druckplatte 13 praktisch druckdicht ist. Dabei ist die Druckplatte 13 die während des gesamten Arbeitsablaufs gekühlt. Hingegen wird die elektrische Heizung der Bodenplatte 12 nur während des Abschmelzvorgangs durch die Steuereinrichtung aktiviert. Während des Abschmelzvorgangs schmilzt der Masseblock, wo er auf der Bodenplatte aufliegt, ab, und der geschmolzene Schmelzhaftklebstoff fließt durch die Bohrungen 26, die Auslaßkanäle 27 und den zentralen Auslauf 28 ab.

Der Masseblock kann wegen der Auskleidung und Beschichtung der den Druckraum 15 bildenden Teile reibungsarm nach unten gegen die Nuten 25 zum Auspressen des geschmolzenen Schmelzhaftklebstoffs gedrückt werden.

Wenn der Masseblock abgeschmolzen ist und der nächste Block eingelegt werden soll, ist zunächst zum Ende des Arbeitsablaufs die Druckplatte 13 durch den Zylinder 14 nach oben zu bewegen. Zuvor wird, um eine möglichst vollständige Trennung der unteren Fläche 20 der Druckplatte zu dem geschmolzenen Schmelzhaftklebstoff zu erreichen, Abdrückluft durch den Anschluß 24 gedrückt, womit sich in dem Druckraum 15 eine Zwischenschicht zwischen dem Schmelzhaftklebstoff und der unteren Fläche 20 der Druckplatte 13 bildet. Zusätzlich wird durch das beschriebene Kühlen der Druckplatte die Haftung des Masseblocks an der Druckplatte 13 stark reduziert.

Die Druckplattenkühlung erfolgt in dem Ausführungsbeispiel durch ein in den Eintrittsanschluß 22 einströmendes, kühles Fluid, welches erwärmt dem Austrittsanschluß 23 entweicht. Es sind jedoch auch andere Arten der Kühlung denkbar. Der einfache Aufbau der Druckschmelzvorrichtung ist im übrigen aus der Zeichnung ersichtlich.

## Patentansprüche

1. Verfahren zum Schmelzen von klebrigen, thermo- oder duroplastischen Massen, inbesondere Schmelzhaftklebestoffen, bei denen die Masse in Form eines Masseblocks in einen Druckraum einer Druckschmelzvorrichtung eingegeben wird, mittels einer Druckplatte gegen einen beheizbare Bodenplatte gepreßt und aufgeschmolzen wird,
dadurch gekennzeichnet,
daß der Masseblock (21) ohne Umhüllung (Folie) in die Druckschmelzvorrichtung (10) eingegeben wird, dabei in dem Druckraum (15) durch eine antiadhäsive, druckfeste Grenzschicht (17) begrenzt wird und an der Druckplatte (13) an einer gekühlten Grenzfläche anliegt.

2. Verfahren nach Anspruch 1,
dadurch gekennzeichnet,
daß der Masseblock (21) in dem Druckraum (15) von der Druckplatte (13) durch zwischen die Druckplatte (13) und den Masseblock (21) eingepreßte Luft getrennt wird.

3. Verfahren nach Anspruck 2,
dadurch gekennzeichnet,
daß die Trennung zwischen dem Masseblock (21) und der Druckplatte (13) erfolgt, wenn sich die Druckplatte (13) in ihrer tiefsten Stellung befindet.

4. Verfahren nach einem der Ansprüche 1 bis 3, dadurch gekennzeichnet,
daß eine (obere) Fläche des Masseblocks (21) während eines Arbeitsablaufs an der während des gesamten Arbeitsablaufs gekühlten Druckplatte (13) gegebenenfalls mit Ausnahme der Zeit der Trennung von der Druckplatte (13) durch die eingepreßte Luft anliegt und daß eine untere Fläche des Masseblocks (21) auf der nur während der Schmelzphase innerhalb des Arbeitsablaufs geheizten Bodenplatte (12) aufliegt.

5. Druckschmelzvorrichtung zur Ausübung des Verfahrens nach einem der Anprüche 1 bis 4, mit einer Aufnahme eines Masseblocks, mit einer in der Aufnahme absenkbaren Druckplatte sowie mit einer beheizbaren Bodenplatte, die einen Druckraum einschließen,
dadurch gekennzeichnet,
daß zumindest sämtliche den Druckraum bildenden Teile, nämlich die Druckplatte (13), die Aufnahme (11) und die beheizbare Bodenplatte (12) mit antiadhäsivem, druckfestem Material beschichtet sind.

6. Druckschmelzvorrichtung nach Anspruch 5, dadurch gekennzeichnet,
daß sämtliche den Druckraum begrenzenden Teile (11, 12, 13) rundum mit dem antiadhäsiven, druckfesten Material beschichtet und damit versiegelt sind.

7. Druckschmelzvorrichtung nach Anspruch 5 oder 6,
dadurch gekennzeichnet,
daß Innenwände des Druckraums (15) zusätzlich zu der Beschichtung mit einer Auskleidung (Platten 17) aus druckfestem, antiadhäsivem Material ausgekleidet sind.

8. Druckschmelzvorrichtung nach einem der Ansprüche 5 bis 7,
dadurch gekennzeichnet,
daß Beschichtung und/oder Auskleidung (Platten 17) aus PTFE besteht.

9. Druckschmelzvorrichtung nach Anspruch 8, gekennzeichnet durch
eine ca. 10 Millimeter dicke Auskleidung (Platten 17) aus PTFE.

10. Druckschmelzvorrichtung nach einem der Ansprüche 5 bis 9,
dadurch gekennzeichnet,
daß die PTFE-Beschichtung auf den Teilen (11, 12, 13) im Einbrennverfahren aufgebracht ist.

11. Druckschmelzvorrichtung nach Anspruch 10, gekennzeichnet durch eine 70 um dicke Beschichtung.

12. Druckschmelzvorrichtung nach einem der Ansprüche 5 bis 11,
dadurch gekennzeichnet,
daß zwischen der beheizbaren Bodenplatte (12) und der Aufnahme (11) eine Zwischenlage (19) aus dem druckfesten Material liegt, welches wärmeisolierend ist.
